(19) Europäisches Patentamt / European Patent Office / Office européen des brevets

(11) **EP 2 466 903 B1**

(12) **EUROPEAN PATENT SPECIFICATION**

(45) Date of publication and mention
of the grant of the patent:
**17.01.2018 Bulletin 2018/03**

(51) Int Cl.:
***H04N 13/00*** (2018.01)

(21) Application number: **11191987.4**

(22) Date of filing: **05.12.2011**

(54) **A method and device for disparity range detection**

Verfahren und Vorrichtung zur Disparitätsbereichserkennung

Procédé et dispositif pour la détection de gamme de disparité

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.12.2010 TR 201010436**

(43) Date of publication of application:
**20.06.2012 Bulletin 2012/25**

(73) Proprietor: **Vestel Elektronik Sanayi ve Ticaret A.S.
45030 Manisa (TR)**

(72) Inventor: **Cigla, Cevahir
06531 ANKARA (TR)**

(74) Representative: **Cayli, Hülya
Paragon Consultancy Inc.
Koza Sokak No: 63/2
GOP
06540 Ankara (TR)**

(56) References cited:
WO-A1-03/036992    US-A1- 2006 013 509
US-A1- 2007 255 480    US-B1- 6 226 396

• DANIEL SCHARSTEIN ET AL: "A Taxonomy and Evaluation of Dense Two-Frame StereoCorrespondence Algorithms", INTERNATIONAL JOURNAL OF COMPUTER VISION, KLUWER ACADEMIC PUBLISHERS, NORWELL, US , vol. 47, no. 1 1 May 2002 (2002-05-01), pages 7-42, XP002714004, ISSN: 0920-5691 Retrieved from the Internet: URL:http://research.microsoft.com/apps/pubs/default.aspx?id=64200 [retrieved on 2013-10-01]

## Description

### Technical Field

The present invention provides a method and a device for detecting a disparity range of stereo content, such as in particular digital stereo video, digital stereo images, scanned film print stereo frames through a broadcast life system in real time or through a storage medium such as a hard disc, scanner, optical disc or the like.

### Prior Art

It is known that stereo content is provided for example by at least two stereo cameras, which are located at the center of a camera rig and which are defined as left and right cameras; however, stereo content can also be provided in a variety of different ways.

In known stereo video processing, a large amount of computation is required for the disparity map estimation (approximately 95 %) which determines the horizontal shift of each pixel between left and right views to achieve a 3D picture on a screen, in particular for example of a TV or a computer monitor.

Depending on the geometry of the stereo or multi view cameras, each horizontal shift corresponds to a depth perceived by the viewer for example on a 3D TV screen. The 3D information extracted from stereo or multi view content is essential for 3D displays in particular 3D TVs for adaptive depth control, since the depth based enhancement depends on the 3D geometry of the scenes.

A plurality of methods for disparity map estimation are known which perform various optimization techniques that have advantages and disadvantages in terms of computational complexity, precision and ease of implementation. However, all of the methods perform a disparity search within a predetermined range independent from the stereo or multi-view content so that the search range is constant in particular for each type of scene, such as an indoor, outdoor scene, a landscape or a macro-view.

This leads to a variety of disadvantages causing the algorithms to stack at local minimums, to miss actual disparities due to a large disparity search range and to perform extra computation for out of range disparity candidates.

Patent document US6226396B1 discloses a method and system for object extraction. According to this document, in order to extract objects, a first image and plurality of second images are used. In said images, 3 dimensional coordinates of the features are calculated and the feature region is extracted as a target object from said first image.

Another patent document US2007255480A1 discloses a system and method for detecting and tracking objects. According to this document, stereo images taken by stereo cameras are used for detecting the location of objects.

### Brief Description of the Invention

This object is solved by a method according to claim 1 and a device according to claim 6 of this invention.

According to the invention, a device and a method is provided to detect a disparity range of stereo content, in particular such as digital stereo video, digital images, scanned film print stereo frames through a live broadcast system in real time or through a storage medium such as a hard disc, scanner, optical disc or the like, of the left view and the right view of at least two cameras, comprising the following steps:

- calibrating the stereo content regarding the left view and the right view,

- detecting distinctive pixels in the stereo content in particular via edge detection or saliency map extraction,

- calculating cost values for candidate disparity values of each detected distinctive pixel within a window of the stereo content,

- determining the candidate disparity values in view of a minimization of the calculated cost values to extract reliable pixels of the candidate disparity values,

- creating a histogram based on the reliable pixels wherein the minimum and maximum disparity candidates are determined in view of a threshold from the histogram to detect the disparity range of the stereo content.

The disparity range detection according to the invention is used to provide a reduction of the computation for dense disparity estimation methods wherein the perceived 3D range is detected to improve 3D imaging for example on a TV screen, a computer monitor or a similar device. In particular, the disparity range detection according to the invention is performed before disparity map estimation to reduce the complexity of computation for a disparity map estimation and further, the disparity range detection according to the invention determines the perceived 3D range of the stereo or multi-view content in 3D ready TVs.

The provided stereo content is processed according to the invention and can be further processed by a stereo matching unit, a depth controller unit, an onscreen display unit or an a variety of different ways and in particular by a stereo video analyzer which performs any additional process on stereo data such as a disparity map estimation.

Since the stereo content can be provided by two stereo cameras which define the left and right view, and thus left and right frames, the disparity range detection according to the invention depending on the geometry of the stereo cameras can correspond to the existing 3D range of the stereo content.

According to a preferred embodiment, the cost values of each detected distinctive pixel within a window of at least a stereo frame are calculated, having a width of w and a height of h by the following equations:

$$Cost\_Left(x,y,d) = \sum_{j=-h/2}^{h/2} \sum_{i=-w/2}^{w/2} \left| I_L(x+i,y+j) - I_R(x+i+d,y+j) \right|$$

$$Cost\_Right(x,y,d) = \sum_{j=-h/2}^{h/2} \sum_{i=-w/2}^{w/2} \left| I_R(x+i,y+j) - I_L(x+i-d,y+j) \right|$$

wherein d refers to the disparity of each pixel (x, y) which is surrounded by the window (w, h).

According to a further option, the method of the invention is characterized in that after the calibrating of the stereo content a downsampling of the left and right frames is performed before the distinctive pixels are detected.

In case that the stereo content has been downsampled after the stereo calibration, an optional upscaling is performed according to the invention after determining the candidate disparity values.

According to an example it is advantageous that after creating a histogram based on the reliable pixels, wherein the minimum and maximum disparity candidates are determined in view of a threshold from the histogram to detect the disparity range of the stereo content, a temporal filtering is applied to the disparity range regarding the previous frame based on the following equations:

disp_min=0.05*disp_min+0.95*previous_disp_min

disp_max=0.05*disp_max+0.95*previous_disp_max

According to a further aspect of the invention a device is provided for detecting a disparity range of the stereo content, in particular such as digital stereo video, digital images, scanned film print stereo frames through a broadcast live system in real-time or through a storage medium such as a hard disk, scanner, optional disk or the like of the left view and the right view of at least two cameras comprising:

- a stereo calibrator regarding the left view and the right view of the stereo content,

- a distinctive pixel detector to detect distinctive pixels in the stereo content, in particular via edge detection or saliency map extraction,

- a cost calculator for calculating cost values for candidate disparity values of each detected distinctive pixel within a window of the stereo content,

- means for determining the candidate disparity values in view of a minimization of the calculated cost values to extract reliable pixels of the candidate disparity values ,

- means for creating a histogram based on the reliable pixels, wherein the minimum an maximum disparity candidates are determined in view of a threshold from a histogram to detect the disparity range of the stereo content.

These and other aspects, features and advantages of the present invention will be described or become apparent from the following detailed description of the preferred embodiments, which is to be read in connection with combining drawings.

## Object of the Invention

The object of the present invention to provide a method and a device for detecting the disparity range of stereo content to reduce the complexity of computation for a disparity map estimation.

## Description of Figures

Embodiments of the present invention will now be described in detail with reference to the accompanying drawings, in which:

Figure 1 is an embodiment of a device to detect a disparity range according to the invention;

Figure 2 shows a flow-chart of the disparity range detection according to the invention;

Figure 3 shows the distinction between vertical and horizontal edges during the disparity search according to the invention;

Figure 4 is an exemplary illustration of the calculation within an arbitrary window around a pixel in color and integral images according to the invention;

Figure 5 is an exemplary illustration of a reliability check among detected best three disparity candidates minimizing the cost function according to the invention;

Figure 6 is an exemplary illustration of the reliability check based on the characteristics of the cost function according to the invention; and

Figure 7 shows a disparity histogram threshold for the detection of minimum and maximum values of the disparity range according to the invention.

The reference numbers as used in figures may possess the following meanings;

| | |
|---|---|
| Stereo calibrator | (1) |
| Down sampler | (2) |
| Distinctive pixel detector | (3) |
| Cost calculator | (4) |
| Reliable pixel detector | (5) |
| Disparity histogram extractor | (6) |
| Histogram thresholder | (7) |
| Scaler | (8) |
| Temporal IIR filter | (9) |
| Stereo calibration | (10) |
| Down sample | (20) |
| Distinctive pixel detection | (30) |
| Cost calculation | (40) |
| Reliable pixel detection | (50) |
| Disparity histogram extraction | (60) |
| Histogram threshold | (70) |
| Scaling | (80) |
| Temporal filter | (90) |
| Stereo content supplier | (101) |
| Stereo processing unit | (102) |
| Disparity range detector | (103) |

(continued)

| | |
|---|---|
| Stereo matching unit | (104) |
| Depth controller unit | (105) |
| On screen display unit | (106) |
| Left view | (107) |
| Right view | (108) |
| Integral image | (109) |

## Detailed Description of the Invention

Hereinafter, embodiments of the present invention will be described in detail with reference to the attached drawings. The present invention is not restricted to the following embodiments, and many variations are possible within the scope of the present invention. The embodiments of the present invention are provided in order to more completely explain examples of the present invention to a person skilled in the art.

It has to be mentioned that the stereo content can be in various formats and can be supplied through various sources, which can provide digital stereo video, digital stereo images, scanned film print stereo frames through a live broadcast system in real time or through storage medium such as a hard disc, scanner, optical disc or the like.

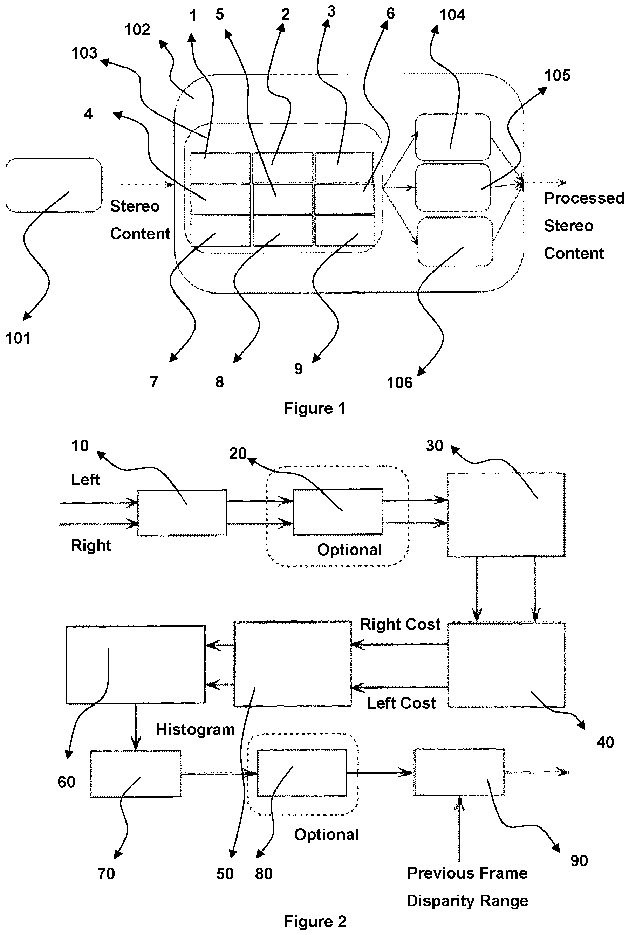

Figure 1 shows a disparity range detector according to the invention, which is a device determining the range of the perceived 3D imaging in a stereo content.

A stereo processing unit (102) receives the stereo content supplied through stereo content supplier (101) and performs the processing of the stereo content for various purposes. For this purpose, the stereo processing unit (102) can be built in a computer or a 3D TV system or the like that exploits stereo content for visualization and 3D perception creation. As an alternative, the stereo processing unit (102) can even build in a camera that enables certain tools for stereo video or image processing. The stereo processing unit (102) can be used for different purposes such as depth extraction, perceived depth control, depth based enhancement or on screen display embedding. The invention is in particular directed to and comprises a disparity range detector unit (103) which is embedded in the stereo processing unit (102) and which determines the depth or disparity range from the stereo content by defining the minimum and maximum depth. The disparity detector unit (103) according to the invention provides a specific working range of the disparity for possible units which can be incorporated in the Stereo Processing Unit (102) such as a stereo matching unit (104) that estimates the disparity map and 3D structure in the stereo video, a depth controller unit (105) that enables the adjustment of perceived 3D, or an On Screen Display Unit (106) that creates patches, subtitles or menu options depending on the 3D structure in the stereo content. The invention can also be exploited for various additional applications that require minimum and maximum perceived depth in the stereo content.

The disparity range detector (103) comprises a plurality of subunits to extract the depth range from the stereo content as explained in the following. As first step, the stereo content is processed within the disparity range detector (103) by the stereo calibrator (1) which equalizes the color characteristics of the stereo (left and right) frames if there is an unbalance between the color characteristics. Then an optional down sampler unit (2) can decrease the resolution of the stereo content in order to decrease computational complexity and to achieve robustness against noise. As next step, a distinctive pixel detector (3) determines the edge or corner pixels in the stereo views that are important for stereo matching. Then a cost calculator (4) determines the similarity between the distinctive pixels in the stereo views depending on the disparity hypotheses by taking absolute Red, Green and Blue channel differences, and preferably comprises means for calculating costs of each detected distinctive pixel within a window of at least a stereo frame. As the next step, a reliable pixel detector (5), determines the pixels having consistent disparity assignments of the reliable pixels. A histogram extractor unit (6) creates a disparity histogram based on the disparity assignments of the reliable pixels. Following thereon a histogram tholder (7) determines the disparity values having large counts over reliable pixels, hence an existing threshold. In case that the stereo frames have been optionally down-sampled after the stereo calibration, then a scaler unit (8) compensates the disparity range by multiplying the detected range with the down sampling ration to map it for actual stereo content resolution in case that an optional down sampler unit (2) was used. Finally the optional temporal IIR (Infinite Impulse Response) filter (9) performs a weighting in time in order to remove possible fluctuations of the disparity range for stereo video case.

As already mentioned, the detection of disparity range of the stereo content, in particular in form of stereo frames for a left and right view is essential to reduce the complexity of computation for a disparity map estimation that can follow the disparity range detection. For the disparity range detection, an initial search for distinctive pixels has to be performed which will be explained in more detail wherein edge pixels or high salient regions are searched which is a more robust solution and reduces the complexity of the further processing of the stereo data in comparison to performing a full search for all pixels which is more complex and may involve misleading solutions.

However, before the detection of distinctive pixels, the stereo frames are calibrated regarding the color and intensity in order to guarantee that all views refer to the same color gamut of the scene. Thus, the stereo calibration is required for initially normalizing the color and intensity of the stereo frames as already mentioned in order to utilize consistent data throughout the disparity range detection process. There are various histogram equalization algorithms related to stereo processing, hence any of these algorithms can be utilized at that step. The invention is not strictly dependent on the choice of normalization method, however, the performance of pre-processing stage effects the performance of the disparity range detection. According to a known method, the normalization is performed according to a reference image which is chosen to be the left frame for the present invention. Hence, assuming that the reference view has the best color alignment with the observed scene, the right view is matched to the reference view based on a histogram. The equalization of histogram is achieved for each channel of RGB data independently. Further details of the normalization and equalization method can be found in document "Histogram- Based Prefiltering for Luminance and Chrominance Compensation of Multiview Video" by Ulrich Fecker, Marcus Barkowsky and Andre Kaup, IEEE transactions on Circuits and Systems for Video Technology, Vol. 18, No. 9, September 2008, pages 1258 to 1267.

The above disparity range detection within the subunits of the disparity range detector (103) is the basis for reducing the computational complexity for thereafter processed stereo content in particular for disparity map estimation. In that manner, the invention provides a disparity range detection algorithm before performing any further process on stereo data.

According to Figures 2 to 7, the method to detect a disparity range in stereo content according to the invention is described in more detail wherein the core idea of the method according to the invention is detecting the visually attractive which means salient regions in the left and right frames, such as vertical edge pixels, locally distinctive pixels through centre-surround differences and the like, as explained with respect to Figures 2 to 7 of the invention.

The flow-chart of Figure 2 shows an overview of the method to detect a disparity range according to the invention, wherein stereo content is provided to a stereo calibration (10) as first step.

The color equalization provides stereo frames to involve similar color distribution by removing possible color difference resulting from different camera calibrations. Once the calibration is performed, stereo frames can be down sampled (20) in next step, in order to save computation. The computation complexity of disparity estimation increases tremendously with the frame size, in that manner working on smaller frames compresses the disparity search range and number of pixels. A typical down sampling ratio is around 2 or 4. However, it is important to note that in the final step of disparity range detection, the range is compensated by scaling up with the same ratio in order to be in the same scale with the original left and right frames. In particular, the down sampling operation is optional and is not vital for detecting the disparity range with optimum precision. It only provides further reduction of the computation complexity.

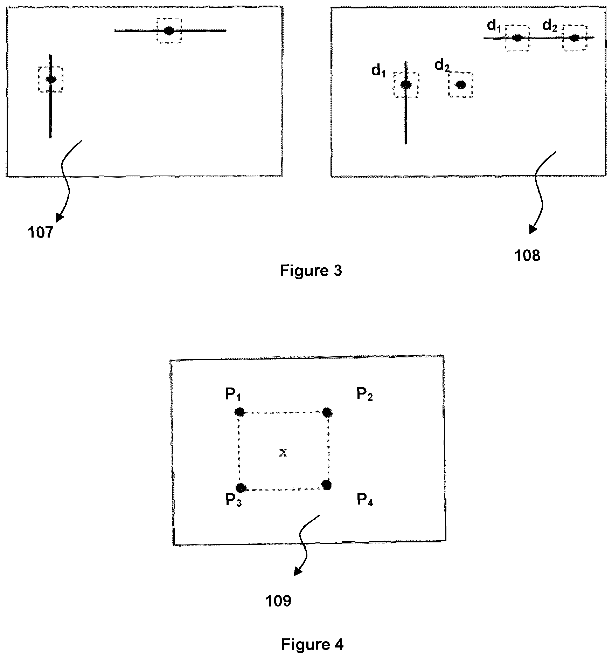

The third step of the method according to the invention as shown in Figure 2 is the detection of distinctive pixels (30) and plays an important role in increasing the robustness. The distinctive pixels in this invention can be determined in two ways, namely edge detection and saliency extraction. In edge detection, the vertical edges are searched since the disparity range to be detected involves only a horizontal shift. The horizontal edges may not provide reliable matching in the horizontal direction, as illustrated in Fig. 3, thus the two disparity candidates (d1, d2) do not provide distinction for the pixels on the horizontal edge, wherein the difference is clear for the vertical edge. The disparities of pixels in a vertical edge are more distinct and unique matches can be obtained. However, for the horizontal edge, the number of the possible candidate disparities is almost equal to the length of the edge; hence robust disparity assignments can not be assigned. In order to determine vertical edges, a high-pass filter is applied to both left and right views as given in detail in equations (A):

$$edgeLeft \quad (x, y) = \left| \sum_{i=-M}^{M} h(i) I_L (x + i, y) \right|$$

$$edgeRight \quad (x, y) = \left| \sum_{i=-M}^{M} h(i) I_R (x + i, y) \right|$$

(A)

In the equations (1), h corresponds to a high-pass filter with length (2M+1) which can be chosen arbitrarily; IL and IR correspond to left and right frames. Once the edge maps of the left view (107) and right view (108) are obtained, pixels which have an edge value higher than a threshold are selected to be distinctive and are exploited in the following cost calculation (40) step.

Apart from vertical edge pixels, the salient pixels can also be exploited in the following way. The salient pixels are determined based on the centre-surround differences which correspond to a measure of distinction of pixels from their surrounds which means that the salient pixels are compared to neighboring pixels. In that manner, the intensities of pixels are subtracted from the mean value of their surrounds. The surround mean value of each pixel is calculated by taking the average intensity among certain windows. The saliency of a pixel for a given window size is calculated as in equation (B); where h corresponds to the index of the utilized window size:

$$C_k(x,y) = I_{RGB}(x,y) - \frac{1}{w*h} \sum_{i=-w/2}^{w/2} \sum_{j=-h/2}^{h/2} I_{RGB}(x+i, y+j) \qquad (B)$$

Large window sizes are utilized during the estimation of the saliency map, thus calculating the mean values within the window for each pixel independently requires huge processing. However, utilizing an integral image (109) drastically decreases the computation complexity. An integral image (109) is defined by equation (C), and the mean value within an arbitrary window size can be found by (P4+P1-P2-P3) as illustrated in Fig. 4.

$$Integral \quad (x,y) = \sum_{i=1}^{x} \sum_{j=1}^{y} I_{RGB}(i,j) \qquad (C)$$

Thus the operation complexity is independent of the window size, since for each window size only four operations are required. After centre-surround differences are calculated for each pixel through five different pre-determined window sizes, the final saliency map is obtained by directly summing those values according to equation (D). In that way, the measure of how the pixels are different from their surroundings is obtained.

$$SaliencyMap(x,y) = \sum_{i=1}^{5} |C_i(x,y)| \qquad (D)$$

The saliency map extraction is performed for both left and right images and the pixels having saliency values larger than a threshold are considered to be distinctive pixels in both of the images.

Thus, the feature points that will be utilized in cost calculation and disparity range detection units are determined by edge or saliency detection. These pixels provide a reliable cost measure, since they involve distinctive characteristics.

The next step of the disparity range detection algorithm is the cost calculation (40). Initially, a disparity search range is settled by considering the frame width, such as (-width/5, width/5). It is assumed that, in any stereo content the disparity out of this range can not provide comfortable 3D feeling. The choice of initial search range can be (-width, width) as well, however, having such disparities is meaningless in term of 3D perception. For each distinctive pixels extracted in the previous step, cost values are calculated within the specified disparity range for left and right frames independently. During cost calculation, the sum of absolute distance or any other similarity measure can be exploited, as given in equations (E).

$$Cost\_Left(x,y,d) = \sum_{j=-h/2}^{h/2} \sum_{i=-w/2}^{w/2} |I_L(x+i, y+j) - I_R(x+i+d, y+j)|$$

$$Cost\_Right(x,y,d) = \sum_{j=-h/2}^{h/2} \sum_{i=-w/2}^{w/2} |I_R(x+i, y+j) - I_L(x+i-d, y+j)| \qquad (E)$$

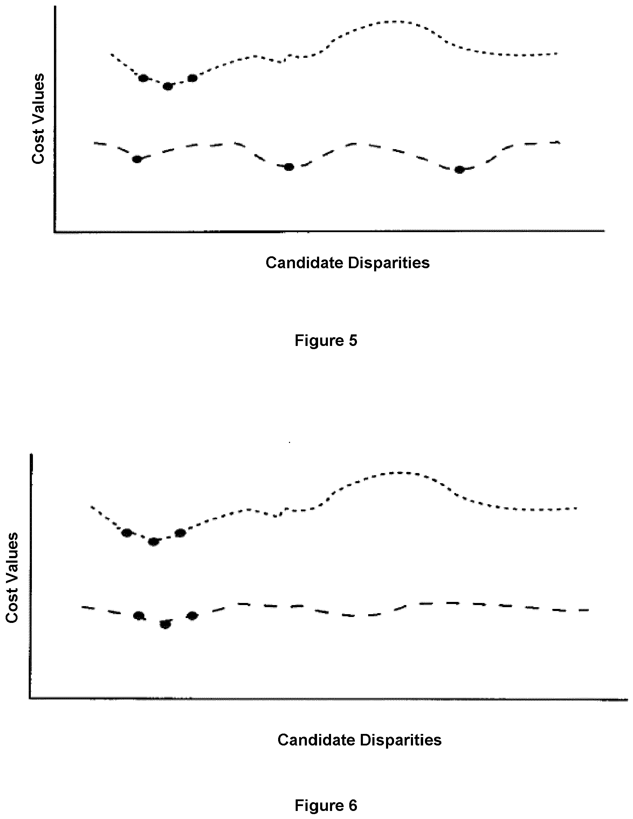

In equations (E), the disparity (d) cost values are calculated within a window (w, h) around the corresponding pixel (x, y) in order to decrease the effect of noise in the frames. In a typical implementation, w and h can be chosen in particular to be 5. Then, the best disparity assignments (d1, d2 and d3) are determined by minimizing the cost function, since noise and repeated patterns may mislead the minimization. If the best three disparity assignments are sparsely separated from each other, then it is concluded that the corresponding pixel does not provide a reliable disparity assignment. The reason behind this approach is illustrated in Figure 5 where two possible cost function distributions are given. In the upper plot, the best three assignments are close to each other, which indicates that the corresponding pixel provides a reliable disparity estimation. However, for the below plot, the best assignments are separated possibly due to repeated pattern or un-textured surface, which provides unreliable disparity characteristics. Hence, for the distinctive pixels a reliability check (50) at step between the best three disparity assignments is performed in order to detect reliable pixels in terms of cost distribution among candidate disparities as in equations (F). In equations (F), "DispThres" is utilized to check if the two disparity values are closer to each other than a threshold. In a typical implementation, this value can be set within a range of (1, 5).

$$R(x,y) = \begin{cases} 1 & if \; |d_1 - d_2| < DispThres \quad and \; |d_2 - d_3| < DispThres \\ 0 & elsewhere \end{cases} \tag{F}$$

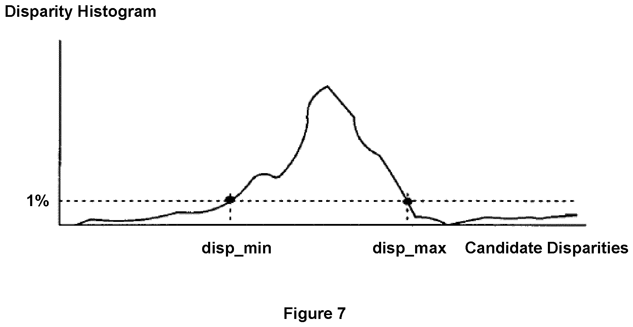

Apart from the best three disparity assignment check, the distribution of the cost values is also considered to determine the reliability of the pixels. In that manner, for each pixel the number of candidate disparities whose cost is closer than a threshold to the minimum cost is calculated. If the number is high, then it can be said that the cost distribution is not enough to be reliable. As illustrated in Figure 6, cost functions may satisfy the first condition (close best three disparities); however, they do not provide good matches. This case occurs when the surface is somehow not textured. At that step, the variance of the cost function can also be considered, such that if the variance of the cost function of a pixel is high, i.e. a uniform distribution of cost values, that pixel is marked to be unreliable. These two reliability checks provide to handle errors that can result from repeated patterns or un-textured surfaces. Once the pixels yielding two conditions of the reliability check are determined, then the histogram of the disparities is obtained (60) by considering best three disparity assignments of these pixels. At that point, the count in the histogram is incremented for each three disparity assignments; hence the histogram of best three estimates is calculated instead of best estimates, which decrease the effect of noise during cost calculation. In step, the disparity range is detected (70) by finding the minimum and maximum disparities in the histogram whose frequencies are above %1, as illustrated in Figure 7. The last step is to apply a temporal filter (90), in which an equation (G) can preferably be used, in order to remove possible abrupt changes in the disparity range, due to temporal noise. In the nature of stereo video, the disparity range changes slowly as long as there is no scene change or very fast motion (not observed in common).

$$\text{disp\_min}=0.05*\text{disp\_min} + 0.95*\text{previous\_disp\_min}$$
$$\text{disp\_max}=0.05*\text{disp\_max}+0.95*\text{previous\_disp\_max} \tag{G}$$

As mentioned before, it is an option to perform a scaling (80) at step 80 in case that previously the stereo content has been down-sampled (20). However, this is not necessary for performing the invention.

In the following, a preferred embodiment of the invention is briefly described, wherein in the first step the stereo frames are calibrated (10) in terms of color by histogram equalization.

As a second step, the stereo frames are down-sampled (20) by a factor of 2 or 4 in order to save computation, which is only an option, as explained before.

In the third step, the distinctive pixels are detected (30) in both left and right frames via edge detection or saliency map extraction, wherein the pixels with high-edge values or high-salience measures are chosen.

In the fourth step, the cost values are calculated (50) for candidate disparity values which are set to be within (-frame_width/5, frame_width/5) by the equations (E).

In step 5, the best three disparity candidates are determined for each distinctive pixel based on the lowest cost.

In step 6 it is checked whether the best three disparity candidates are close to each other, if not, the corresponding pixel is ignored.

In step 7, the reliability of the cost functions is determined by counting the disparity candidates whose cost value is closer than a threshold to the minimum cost, wherein the corresponding pixel is ignored in case that the number is above 10% of the total candidates.

In step 8, a disparity histogram is constructed (60) by considering the best three disparity candidates of the reliability pixels detected in step 6 and 7.

In step 9, the minimum and maximum disparities are detected (70), wherein it is compared if the frequency of the total histogram is at least 1%.

In step 10, the disparity bounds are scaled (80) by the down sample ratio in order to compensate an optional down-sampling which could have been performed in the second step of this embodiment.

In step 11, a temporal filter is applied (90) for the disparity range of the previous frame in order to remove a flickering, wherein the equations (G) are used:

According to the invention a method and a device are described utilizing visually distinctive pixels in stereo (multi-view) videos to detect the disparity range, indicating maximum and minimum available disparity values.

According to the invention, at first a calibration of the stereo video is performed regarding the color so that the left and right frames are originated from the same color gamut. In case of multi-view video, two centre cameras are chosen to be left and right views and the detected disparity range is applied to the whole camera rig. Once the color equalization is performed, the stereo frames can be down-sampled to further reduce the complexity of computation in the following. The detection of distinctive pixels can be achieved in two different ways, namely by vertical edge detection and by saliency map extraction. The pixels having high edge or saliency measures are assigned to be distinctive. A disparity search is performed for the distinctive pixels within a predetermined fixed range, in particular such as (-widthl5, width/5) by exploiting any similarity measure, Sum of Absolute Distance, Mean Absolute Distance, Mean Square Error. The best three disparity candidates minimizing the cost function are stored for all the distinctive pixels and a reliability check is performed depending on the distribution of the cost function and the best disparity candidates. A disparity histogram is formed by the reliable distinctive pixels and the corresponding best three disparities. The reliability detection handles possible assignment errors due to un-textured regions and repeated patterns. The detection of the disparity range is finally achieved by determining the minimum and maximum disparity candidates having occurrence frequencies above 1% in the disparity histogram. In order to prevent sharp changes of the disparity range in time, temporal filtering is performed by weighting the current and previous stereo frame disparity ranges.

## Claims

1. Method for detecting a disparity range of stereo content, in particular such as digital stereo video, digital images, scanned film print stereo frames through a live broadcast system in real time or through a storage medium such as a hard disc, scanner, optical disc or the like of the left view and the right view of at least two cameras, comprising the following steps:

   - calibrating the stereo content (10) regarding the left view and the right view ,
   - detecting distinctive pixels in the stereo content (30) in particular via edge detection or saliency map extraction,
   - calculating cost values (40) for each detected distinctive pixel within a window of at least a stereo frame, having a width and a height,
   - determining the candidate disparity values (50) in view of a minimization of the calculated cost values, by selecting disparity candidates with minimum cost values, to extract reliable pixels of the candidate disparity values, wherein a pixel is said to be reliable if said pixel has consistent disparity assignments,
   - creating a histogram (60) based on the reliable pixels wherein the minimum and maximum disparity candidates are determined in view of a threshold from the histogram to detect the disparity range of the stereo content (70)

   **characterized in that** reliability check for the pixels is performed by the following equation;

   $$R(x, y) = \begin{cases} 1 & if \; |d_1 - d_2| < DispThres \quad and \; |d_2 - d_3| < DispThres \\ 0 & elsewhere \end{cases} \Biggr\} \quad (F)$$

   wherein d1, d2 and d3 are the best three disparity assignments of the pixel, DispThres is a threshold value and R(x, y) is the result of reliability check.

2. Method according to claim 1, **characterized in that** calculating cost values (40) of each detected distinctive pixel within a window of at least a stereo frame, having a width of w and a height of h by the following equations:

$$Cost\_Left(x,y,d) = \sum_{j=-h/2}^{h/2} \sum_{i=-w/2}^{w/2} |I_L(x+i,y+j) - I_R(x+i+d,y+j)|$$

$$Cost\_Right(x,y,d) = \sum_{j=-h/2}^{h/2} \sum_{i=-w/2}^{w/2} |I_R(x+i,y+j) - I_L(x+i-d,y+j)|$$

wherein d refers to the disparity of each pixel (x, y) which is surrounded by the window (w, h), $I_L$ and $I_R$ correspond to pixel intensities of left and right frames.

3. Method according to claim 1 or 2, **characterized in that** after the calibrating of the stereo content (10), a down-sampling of the left and right frames (20) is performed before the distinctive pixels are detected.

4. Method according to claim 3, **characterized in that** after determining the candidate disparity values (50), an optional up-scaling (80) is performed in case that the stereo content has been down-sampled after the stereo calibration.

5. Method according to at least one of the preceding claims 1 to 4, **characterized in that** reliability check for the pixels is performed by

   - for each pixel, calculating the number of candidate disparities whose cost is closer than a threshold to the minimum cost
   - if calculated number is high, determining that cost distribution is not enough to be reliable.

6. Device for detecting a disparity range of stereo content, in particular such as digital stereo video, digital images, scanned film print stereo frames through a live broadcast system in real-time or through a storage medium such as a hard disk, scanner, optional disk or the like of the left view and the right view of at least two cameras comprising:

   - a stereo calibrator (1) regarding the left view and the right view of the stereo content,
   - a distinctive pixel detector (3) to detect distinctive pixels in the stereo content, in particular via edge detection or saliency map extraction,
   - a cost calculator (4) for calculating cost values for each detected distinctive pixel within a window of at least a stereo frame, having a width and a height,
   - means for determining the candidate disparity values (5) in view of a minimization of the calculated cost values by selecting disparity candidates with minimum cost values, to extract reliable pixels of the candidate disparity values, wherein a pixel is said to be reliable if said pixel has consistent disparity assignments,
   - means for creating a histogram (6), based on the reliable pixels, wherein the minimum an maximum disparity candidates are determined in view of a threshold from a histogram to detect the disparity range of the stereo content

   **characterized in that** said means for determining the candidate disparity values (5) extracts the reliable pixels according to the following equation;

$$R(x,y) = \begin{cases} 1 & if \ |d_1 - d_2| < DispThres \quad and \ |d_2 - d_3| < DispThres \\ 0 & elsewhere \end{cases} \quad (F)$$

wherein d1, d2 and d3 are the best three disparity assignments of the pixel, DispThres is a threshold value and R(x, y) is the result of reliability check.

7. Device according to claim 6, **characterized in that** the cost calculator (4) calculates costs (40) of each detected distinctive pixel within a window of at least a stereo frame, having a width of w and a height of h by the following equations:

$$Cost\_Left(x,y,d) = \sum_{j=-h/2}^{h/2} \sum_{i=-w/2}^{w/2} \left| I_L(x+i,y+j) - I_R(x+i+d,y+j) \right|$$

$$Cost\_Right(x,y,d) = \sum_{j=-h/2}^{h/2} \sum_{i=-w/2}^{w/2} \left| I_R(x+i,y+j) - I_L(x+i-d,y+j) \right|$$

wherein d refers to the disparity of each pixel (x, y) which is surrounded by the window (w, h), $I_L$ and $I_R$ correspond to pixel intensities of left and right frames.

8. Device according to claim 6 or 7, **characterized in that** a down-sampler (2), is incorporated within the device which down-samples the left and right frames (20) before the distinctive pixels are detected after the calibration of the stereo content (10).

9. Device according to claim 8, **characterized in that** a scaler (8) is provided within the device to up-scale (80) the data after determining the candidate disparity values (50).

**Patentansprüche**

1. Verfahren zur Disparitätsbereichserkennung von stereoskopischen Inhalten, insbesondere etwa digitales Stereovideo, Digitalbilder, gescannte Filmdruck-Stereo-Frames, in einem Live-Sendesystem in Echtzeit oder einem Speichermedium wie Harddisk, Scanner, optische Disk oder dergleichen, der linken Ansicht und der rechten Ansicht von wenigstens zwei Kameras, mit den folgenden Schritten:

   - Kalibrieren der stereoskopischen Inhalte (10) in Bezug auf die linke Ansicht und die rechte Ansicht,
   - Detektieren von markanten Bildelementen in dem stereoskopischen Inhalt (30), insbesondere über Kantenerkennung oder Extraktion einer Karte mit hervorstechenden Merkmalen,
   - Berechnen von Kostenwerten (40) für jedes erkannte markante Bildelement innerhalb eines Fensters wenigstens eines Stereo-Frames, das eine Breite und eine Höhe hat,
   - Bestimmen von Kandidatendisparitätswerten (50) im Hinblick auf eine Minimierung der berechneten Kostenwerte, indem die Disparitätskandidaten mit den niedrigsten Kostenwerten ausgewählt werden, um verlässliche Bildelemente der Kandidatendisparitätswerte zu extrahieren, wobei ein Bildelement als verlässlich bezeichnet wird, wenn das Bildelement konsistente Disparitätszuordnungen hat,
   - Erzeugen eines Histogramms (60) auf Basis der verlässlichen Bildelemente, wobei die minimalen und maximalen Disparitätskandidaten im Hinblick auf eine Schwelle aus dem Histogramm bestimmt werden, um den Disparitätsbereich des stereoskopischen Inhalts zu erkennen (70),

   **dadurch gekennzeichnet, dass** die Prüfung auf Verlässlichkeit der Bildelemente durch die folgende Gleichung durchgeführt wird:

$$R(x,y) = \begin{cases} 1 & if \left| d_1 - d_2 \right| < DispThres \quad and \left| d_2 - d_3 \right| < DispThres \\ 0 & elsewhere \end{cases} \Bigg\} (F)$$

   wobei d1, d2 und d3 die besten drei Disparitätszuordnungen des Bildelements, DispThres ein Schwellenwert und R(x, y) das Resultat der Prüfung der Verlässlichkeit sind.

2. Verfahren nach Anspruch 1, **dadurch gekennzeichnet, dass** die Kostenwerte von jedem erkannten markanten Bildelement innerhalb eines Fensters von wenigstens einem Stereo-Frame, das eine Breite w und eine Höhe h hat, durch die folgenden Gleichungen berechnet werden (40):

$$Cost\_Left(x,y,d) = \sum_{j=-h/2}^{h/2} \sum_{i=-w/2}^{w/2} \left| I_L(x+i,y+j) - I_R(x+i+d,y+j) \right|$$

$$Cost\_Right(x,y,d) = \sum_{j=-h/2}^{h/2} \sum_{i=-w/2}^{w/2} \left| I_R(x+i,y+j) - I_L(x+i-d,y+j) \right|$$

wobei d sich auf die Disparität jedes Bildelements (x, y) bezieht, das von dem Fenster (w, h) umgeben ist, und $I_L$ und $I_R$ Bildelementintensitäten der linken und rechten Frames entsprechen.

3. Verfahren nach Anspruch 1 oder 2, **dadurch gekennzeichnet**, das nach dem Kalibrieren des stereoskopischen Inhalts (10) ein Downsampling der linken und rechten Frames durchgeführt wird (20), bevor die markanten Bildelement detektiert werden.

4. Verfahren nach Anspruch 3, **dadurch gekennzeichnet, dass** nach Bestimmen der Kandidatendisparitätswerte (50) ein optionales Up-Scaling durchgeführt wird (80), falls der stereoskopische Inhalt nach der Stereokalibration einem Downsampling unterzogen worden ist.

5. Verfahren nach wenigstens einem der vorhergehenden Ansprüche 1 bis 4, **dadurch gekennzeichnet, dass** die Prüfung der Verlässlichkeit der Bildelement durchgeführt wird, indem

    - für jedes Bildelement die Anzahl von Kandidatendisparitäten berechnet wird, deren Kosten näher als eine Schwelle an den minimalen Kosten liegen,
    - wenn die berechnete Anzahl hoch ist, festgestellt wird, dass die Kostenverteilung nicht ausreichend ist, um verlässlich zu sein.

6. Vorrichtung zur Disparitätsbereichserkennung von stereoskopischem Inhalt, insbesondere digitales Stereovideo, Digitalbilder, gescannte Filmdruck-Stereo-Frames, in einem Live-Sendesystem in Echtzeit oder in einem Speichermedium, wie HardDisk, Scanner, optische Disk oder dergleichen, der linken Ansicht und der rechten Ansicht von wenigstens zwei Kameras mit:

    - einem Stereo-Kalibrator (1) für die linke Ansicht und die rechte Ansicht des stereoskopischen Inhalts,
    - einem Detektor (3) für markante Bildelemente, um markante Bildelemente in dem stereoskopischen Inhalt zu erkennen, insbesondere über Kantenfilterung oder Extraktion einer Karte mit hervorstehenden Merkmalen,
    - einem Kostenrechner (4) zum Berechnen von Kostenwerten für jedes erkannte markante Bildelement innerhalb eines Fensters von wenigstens einem Stereo-Frame mit einer Breite und einer Höhe,
    - Einrichtungen zum Bestimmen von Kandidatendisparitätswerten (5) im Hinblick auf eine Minimierung der berechneten Kostenwerte, indem Disparitätskandidaten mit minimalen Kostenwerten ausgewählt werden, um verlässliche Bildelemente der Kandidatendisparitätswerte zu extrahieren, wobei ein Bildelement als verlässlich bezeichnet wird, wenn das Bildelement konsistente Disparitätszuordnungen hat,
    - Einrichtungen zum Erzeugen eines Histogramms (6) auf Grundlage der verlässlichen Bildelemente, wobei die minimalen und maximalen Disparitätskandidaten im Hinblick auf eine Schwelle aus einem Histogramm bestimmt werden, um den Disparitätsbereich des stereoskopischen Inhalts zu bestimmen,

**dadurch gekennzeichnet, dass** die Einrichtungen zum Bestimmen der Kandidatendisparitätswerte (5) die verlässlichen Bildelemente gemäß der folgenden Gleichung extrahieren:

$$R(x,y) = \begin{cases} 1 & if \left| d_1 - d_2 \right| < DispThres \quad and \left| d_2 - d_3 \right| < DispThres \\ 0 & elsewhere \end{cases} \quad (F)$$

wobei d1, d2 und d3 die besten drei Disparitätszuordnungen des Bildelements, DispThres ein Schwellenwert und R(x, y) das Resultat der Verlässlichkeitsprüfung sind.

**7.** Vorrichtung nach Anspruch 6, **dadurch gekennzeichnet, dass** der Kostenrechner (4) die Kosten jedes detektierten markanten Bildelements innerhalb eines Fensters von wenigstens einem Stereo-Frame, das eine Breite w und eine Höhe h hat, durch die folgenden Gleichungen berechnet (40):

$$Cost\_Left(x,y,d) = \sum_{j=-h/2}^{h/2} \sum_{i=-w/2}^{w/2} \left| I_L(x+i,y+j) - I_R(x+i+d,y+j) \right|$$

$$Cost\_Right(x,y,d) = \sum_{j=-h/2}^{h/2} \sum_{i=-w/2}^{w/2} \left| I_R(x+i,y+j) - I_L(x+i-d,y+j) \right|$$

wobei d sich auf die Disparität jedes Bildelements (x, y) bezieht, das durch das Fenster (w, h) umgeben ist, $I_L$ und $I_R$ den Bildelementintensitäten der linken und rechten Frames entsprechen.

**8.** Vorrichtung nach Anspruch 6 oder 7, **dadurch gekennzeichnet, dass** ein Down-Sampler (2) in die Vorrichtung integriert ist, der die linken und rechten Frames einem Downsampling unterzieht (20), bevor die markanten Bildelemente nach der Kalibration des stereoskopischen Inhalts (10) detektiert werden.

**9.** Vorrichtung nach Anspruch 8, **dadurch gekennzeichnet, dass** ein Skalierer (8) in der Vorrichtung vorhanden ist, um die Daten nach Bestimmen der Kandidatendisparitätswerte (50) heraufzuskalieren (80).

**Revendications**

**1.** Procédé de détection d'une gamme de disparité d'un contenu stéréo, en particulier tel qu'une vidéo stéréo numérique, des images numériques, des trames stéréo de tirage de film scanné par le biais d'un système de diffusion en direct en temps réel ou par le biais d'un support de stockage tel qu'un disque dur, un scanner, un disque optique ou similaire, de la vue gauche et la vue droite d'au moins deux caméras, comprenant les étapes suivantes :

- l'étalonnage du contenu stéréo (10) concernant la vue gauche et la vue droite,
- la détection de pixels distinctifs dans le contenu stéréo (30) en particulier par le biais d'une détection de bord ou d'une extraction de cartographique de caractéristiques saillantes,
- le calcul de valeurs de coût (40) pour chaque pixel distinctif détecté dans une fenêtre d'au moins une trame stéréo, ayant une largeur et une hauteur,
- la détermination des valeurs de disparité candidates (50) en vue d'une minimisation des valeurs de coût calculées, en sélectionnant des candidates de disparité avec des valeurs de coût minimales, pour extraire des pixels fiables des valeurs de disparité candidates, dans lequel un pixel est défini comme étant fiable si ledit pixel a des attributions de disparité cohérentes,
- la création d'un histogramme (60) sur la base des pixels fiables dans lesquels les candidates de disparité minimale et maximale sont déterminées compte tenu d'un seuil à partir de l'histogramme pour détecter la gamme de disparité du contenu stéréo (70)

**caractérisé en ce que** le contrôle de fiabilité pour les pixels est effectué par l'équation suivante :

$$R(x,y) = \begin{cases} 1 \; si \; |d_1 - d_2| < DispThres \; et \; |d_2 - d_3| < DispThres \\ 0 \; ailleurs \end{cases} (F)$$

dans laquelle d1, d2 et d3 sont les trois meilleures attributions de disparité du pixel, DispThres est une valeur de seuil et R(x, y) est le résultat du contrôle de fiabilité.

**2.** Procédé selon la revendication 1, **caractérisé en ce que** le calcul de valeurs de coût (40) pour chaque pixel distinctif détecté dans une fenêtre d'au moins une trame stéréo, ayant une largeur w et une hauteur h, par les équations suivantes :

$$Cost\_Left(x,y,d) = \sum_{j=-h/2}^{h/2} \sum_{i=-w/2}^{w/2} \left| I_L(x+i,y+j) - I_R(x+i+d,y+j) \right|$$

$$Cost\_Right(x,y,d) = \sum_{j=-h/2}^{h/2} \sum_{i=-w/2}^{w/2} \left| I_R(x+i,y+j) - I_L(x+i-d,y+j) \right|$$

dans laquelle d se réfère à la disparité de chaque pixel (x, y) qui est entouré par la fenêtre (w, h), $I_L$ et $I_R$ correspondent à des intensités de pixel de trames gauche et droite.

3. Procédé selon la revendication 1 ou 2, **caractérisé en ce que**, après l'étalonnage du contenu stéréo (10), un sous-échantillonnage des trames gauche et droite (20) est effectué avant que les pixels distinctifs soient détectés.

4. Procédé selon la revendication 3, **caractérisé en ce que**, après la détermination des valeurs de disparité candidates (50), un agrandissement d'échelle optionnel (80) est effectué dans le cas où le contenu stéréo a été sous-échantillonné après l'étalonnage stéréo.

5. Procédé selon au moins une des revendications précédentes 1 à 4, **caractérisé en ce qu'**un contrôle de fiabilité pour les pixels est effectué par

   - pour chaque pixel, le calcul du nombre de disparités candidates dont le coût est plus proche du coût minimal qu'un seuil
   - si le nombre calculé est élevé, la détermination du fait qu'une distribution de coûts n'est pas suffisamment fiable.

6. Dispositif de détection d'une gamme de disparité de contenu stéréo, en particulier tel qu'une vidéo stéréo numérique, des images numériques, des trames stéréo de tirage de film scanné par le biais d'un système de diffusion en direct en temps réel ou par le biais d'un support de stockage tel qu'un disque dur, un scanner, un disque optique ou similaire, de la vue gauche et la vue droite d'au moins deux caméras, comprenant:

   - un dispositif d'étalonnage stéréo (1) concernant la vue gauche et la vue droite du contenu stéréo,
   - un détecteur de pixels distinctifs (3) pour détecter des pixels distinctifs dans le contenu stéréo, en particulier par le biais d'une détection de bord ou d'une extraction de cartographique de caractéristiques saillantes,
   - un calculateur de coût (4) pour calculer des valeurs de coût pour chaque pixel distinctif détecté dans une fenêtre d'au moins une trame stéréo, ayant une largeur et une hauteur,
   - des moyens pour déterminer les valeurs de disparité candidates (5) en vue d'une minimisation des valeurs de coût calculées, en sélectionnant des candidates de disparité avec des valeurs de coût minimales, pour extraire des pixels fiables des valeurs de disparité candidates, dans lequel un pixel est défini comme étant fiable si ledit pixel a des attributions de disparité cohérentes,
   - des moyens pour créer un histogramme (6), sur la base des pixels fiables dans lesquels les candidates de disparité minimale et maximale sont déterminées compte tenu d'un seuil à partir d'un histogramme pour détecter la gamme de disparité du contenu stéréo

   **caractérisé en ce que** lesdits moyens pour déterminer les valeurs de disparité candidates (5) extraient les pixels fiables selon l'équation suivante :

$$R(x,y) = \begin{cases} 1 \ si \ |d_1 - d_2| < DispThres \ et \ |d_2 - d_3| < DispThres \\ 0 \ ailleurs \end{cases} (F)$$

   dans laquelle d1, d2 et d3 sont les trois meilleures attributions de disparité du pixel, DispThres est une valeur de seuil et R(x, y) est le résultat du contrôle de fiabilité.

7. Dispositif selon la revendication 6, **caractérisé en ce que** le calculateur de coût (4) calcule des coûts (40) de chaque pixel distinctif détecté dans une fenêtre d'au moins une trame stéréo, ayant une largeur w et une hauteur h, par les équations suivantes :

$$Cost\_Left(x, y, d) = \sum_{j=-h/2}^{h/2} \sum_{i=-w/2}^{w/2} \left| I_L(x + i, y + j) - I_R(x + i + d, y + j) \right|$$

$$Cost\_Right(x, y, d) = \sum_{j=-h/2}^{h/2} \sum_{i=-w/2}^{w/2} \left| I_R(x + i, y + j) - I_L(x + i - d, y + j) \right|$$

dans laquelle d se réfère à la disparité de chaque pixel (x, y) qui est entouré par la fenêtre (w, h), $I_L$ et $I_R$ correspondent à des intensités de pixel de trames gauche et droite.

8. Dispositif selon la revendication 6 ou 7, **caractérisé en ce qu'**un sous-échantillonneur (2) est incorporé dans le dispositif, qui sous-échantillonne les trames gauche et droite (20) avant que les pixels distinctifs soient détectés après l'étalonnage du contenu stéréo (10).

9. Dispositif selon la revendication 8, **caractérisé en ce qu'**un dispositif de mise à l'échelle (8) est disposé dans le dispositif pour agrandir l'échelle (80) des données après la détermination des valeurs de disparité candidates (50).

$$Cost\_Left(x, y, d) = \sum_{j=-h/2}^{h/2} \sum_{i=-w/2}^{w/2} \left| I_L(x + i, y + j) - I_R(x + i + d, y + j) \right|$$

Figure 1

Figure 2

107

108

Figure 3

109

Figure 4

Figure 5

Figure 6

**Disparity Histogram**

Figure 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6226396 B1

- US 2007255480 A1

**Non-patent literature cited in the description**

- **ULRICH FECKER.** Histogram- Based Prefiltering for Luminance and Chrominance Compensation of Multiview Video. *Marcus Barkowsky and Andre Kaup, IEEE transactions on Circuits and Systems for Video Technology,* September 2008, vol. 18 (9), 1258-1267